# EUROPÄISCHE PATENTSCHRIFT

(11) **EP 2 329 115 B1**
(45) Veröffentlichungstag und Bekanntmachung des Hinweises auf die Patenterteilung: **11.12.2013**
(21) Anmeldenummer: 09777228.9
(22) Anmeldetag: 16.07.2009
(51) Int. Cl.: B23P 6/02, B23C 3/05, F01P 3/14, F02F 1/40, F01L 3/06, F01L 3/22

(54) **VERFAHREN ZUR REPARATUR VON SCHÄDEN EINES WASSERGEKÜHLTEN ZYLINDERKOPFES BEI 4-TAKT-VERBRENNUNGSMOTOREN, SOWIE ZYLINDERKOPF**
METHOD FOR REPAIRING DAMAGE TO A WATER-COOLED CYLINDER HEAD IN 4-CYCLE INTERNAL COMBUSTION ENGINES, AND CYLINDER HEAD
PROCÉDÉ DE RÉPARATION D'ENDOMMAGEMENTS D'UNE CULASSE DE CYLINDRE REFROIDIE PAR EAU DANS DES MOTEURS À COMBUSTION INTERNE À 4 TEMPS AINSI QUE CULASSE DE CYLINDRE

(30) Priorität: 02.10.2008 DE 102008050388
(43) Veröffentlichungstag der Anmeldung: 08.06.2011
(73) Patentinhaber: Märkisches Werk GmbH, 58553 Halver (DE)
(72) Erfinder: FELLMANN, Holger, 51429 Bergisch Gladbach (DE)
(74) Vertreter: Grättinger Möhring von Poschinger Patentanwälte Partnerschaft
(86) Internationale Anmeldenummer: PCT/EP2009/005166
(87) Internationale Veröffentlichungsnummer: WO 2010/037438

(56) Entgegenhaltungen:
- WO-A-2008/059108
- DE-A1- 1 576 727
- DE-A1-102004 027 084
- FR-A- 1 012 328
- FR-A- 2 336 552
- JP-A- 1 203 607
- US-A- 2 751 671
- US-A- 3 450 575
- US-A1- 2004 216 295

## Beschreibung

Die Erfindung betrifft ein Verfahren gemäß dem Oberbegriff von Patentanspruch 1.

Ein derartiges Verfahren ist aus US 2751671 A bekannt.

Auf Schiffen werden Verbrennungsmotoren mit Leistungen bei ca. 4 MW als sogenannte Hilfsmotoren zur Stromerzeugung eingesetzt, bei denen es zu Verschleißerscheinungen im Bereich der Zylinderköpfe kommen kann, wie die Praxis gezeigt hat. In der Fachwelt sind derartige Verschleißerscheinungen allgemein bekannt. Sie treten bevorzugt in den die Ventilsitzringe aufnehmenden Sitzringtaschen im Zylinderkopf von Ein- oder Auslassventilen auf. Dabei geht es um Verschleißerscheinungen aufgrund Kavitation im Bereich der durch die Sitzringtaschen gebildeten Kühlkanäle. Die dabei auf Seiten des Zylinderkopfs beobachteten lochartigen Schädigungen und Materialzerrüttungen im Gussmaterial des Zylinderkopfs mit zum Teil tief in das Material hinein erstreckten Hohlräumen können derart gravierend sein, dass ein Austausch des kompletten Zylinderkopfs unvermeidbar ist. Geringere Verschleißerscheinungen werden auch an den Ventilsitzringen selbst beobachtet.

Nach einem aus DE 10156196 C1 bekannten Verfahren zur Herstellung eines Ventilsitzes für einen Zylinderkopf einer Brennkraftmaschine ist vorgesehen, dass an der Stelle des Ventilsitzes eine Legierung auf den Zylinderkopf aufgeschmolzen wird, durch welche der Ventilsitz gebildet wird. Dieses bekannte Herstellungsverfahren ist nicht als Reparaturverfahren vorgesehen.

Ferner ist es aus DE 4031083 C1 bekannt, eine einfache und preisgünstige Reparatur einer Ventilsitzkühlung im Zylinderkopf dadurch zu ermöglichen, dass ein Ventilsitzring in Form eines vorgefertigten Rohres auswechselbar eingesetzt wird, welches vom Kühlmedium durchströmt wird. Diese bekannte Vorrichtung betrifft nur die Ventilsitzkühlung als solche, stellt also kein Reparaturverfahren für Schäden am Zylinderkopf zur Verfügung.

Schließlich ist es aus AT 003977 U1 bekannt, eine verbesserte Wärmeableitung von den Ventilsitzringen dadurch zu erreichen, dass der Ventilsitzring in einem axial an den Zylinderkopf angrenzenden Stirnbereich eine höhere Wärmeleitfähigkeit aufweist als in seinem radial an den Zylinderkopf angrenzenden Mantelbereich. Auf diese Weise erreicht man eine axial gerichtete gute Wärmeableitung, wohingegen diese in radialer Richtung erwünschterweise geringer ist, so dass die Brückenbereiche im Zylinderkopf zwischen den Ventilen thermisch weniger hoch beansprucht werden.

Darüber hinaus sind Ventilsitzringe bekannt, die aus zwei umlaufend miteinander verschweißten Ringteilen zusammengesetzt sind (vgl. FR FR 1 012 328 A, DE 10 2004 027 084 A1, JP 61 194729, JP 55 100012 U). Diese werden vor dem Einsetzen in die Sitzringtaschen des Zylinderkopfs mit Bohrungen für den Anschluss an einen äußeren Kühlkanal versehen, sodass bei deren Montage auf die genaue Positionierung am Ort des Anschlusses zu achten ist.

Der vorliegenden Erfindung liegt demgegenüber die Aufgabe zugrunde, bei Vermeidung einer Erneuerung des kompletten Zylinderkopfs ein Reparaturverfahren zu schaffen, welches neben erheblichen finanziellen Einsparungen eine Lebensdauer des reparierten Zylinderkopfs ermöglicht welche deutlich seine Lebensdauer bis zum eingetretenen Erstschaden übertrifft.

Diese Aufgabe wird an einem Verfahren der eingangs genannten Art durch die folgenden zeitlich aufeinanderfolgenden Reparaturschritte gelöst:
a) Ausdrehen der geschädigten Sitzringtaschen derart weitgehend, dass neben oberflächlichen Beschädigungen auch tiefer liegenden Hohlräume im Material des Zylinderkopfs (6) im wesentlichen beseitigt werden;
b) Einsetzen in die ausgedrehten Sitzringtaschen jeweils eines dazu passenden Ventilsitzrings (1; 2) aus einem verschleißfesten Werkstoff;
c) Verbinden vorhandener Kühlkanäle mit zu kühlenden Ventilsitzringen (2), derart,
   dass ein zunächst geschlossener Kühlkanal (3) eines Ventilsitzrings (2) nach dessen Einsetzen von außen angebohrt wird, um die Verbindung mit den im Zylinderkopf (6) vorhandenen Kühlkanälen herzustellen.

Demnach macht das erfindungsgemäße Verfahren von der Erkenntnis Gebrauch, dass die geschädigten Sitzringtaschen in der Tiefe und auch in radialer Richtung extrem weit ausgedreht werden müssen, um auch tiefer liegende Hohlräume zu erfassen, die durch die beobachteten Kavitationsschäden typischerweise entstehen.

Bei Ausführungsformen mit Ventilsitzringen, die einer Kühlung bedürfen, werden die dort im Austausch eingesetzten Ventilsitzringe mit den vorhandenen Kühlkanälen verbunden. Dabei kann es zweckmäßig sein, die Strömungsquerschnitte der vorhandenen Kühlkanäle zu vergrößern.

Die im Austausch eingesetzten Ventilsitzringe werden derart ausgebildet, dass sie einen geschlossenen Kühlkanal ausbilden, der nach dem Einsetzen von außen angebohrt wird, um die Verbindung mit den im Zylinderkopf vorhandenen Kühlkanälen herzustellen.

Hierzu ist vorteilhaft vorgesehen, dass in die Bohrungen Buchsen zum Dichten der Übergänge von den Kühlkanälen des Zylinderkopfs zum jeweiligen Ventilsitzring eingesetzt werden.

Bei Ausführungsformen mit Ventilsitzringen, die keiner Kühlung bedürfen wird erfindungsgemäß vorgeschlagen, die im Zylinderkopf vorhandenen Kühlkanäle zu den im Austausch eingesetzten Ventilsitzringen mittels Verschlussstopfen zu verschließen, gemäß den folgenden aufeinanderfolgenden Verfahrensschritten:
a) Ausdrehen der geschädigten Sitzringtaschen derart weitgehend, dass neben oberflächlichen Beschädigungen auch tiefer liegenden Hohlräume im Material des Zylinderkopfs (6) im wesentlichen beseitigt werden;
b) Einsetzen in die ausgedrehten Sitzringtaschen jeweils eines dazu passenden massiven Ventilsitzrings (1; 2) aus einem verschleißfesten Werkstoff;
c) Verschließen ursprünglich vorhandener Kühlkanäle zu Ventilsitzringen, die keiner Kühlung bedürfen, mittels Verschlussstopfen (23, 24) .

Eine besonders rationelle Ausgestaltung des erfindungsgemäßen Reparaturverfahrens besteht darin, dass die Sitzringtaschen jeweils bis zum Erreichen vorgegebener Abmessungen ausgedreht werden, so dass die zum Austausch eingesetzten Ventilsitzringe vorgefertigt werden können. Die Reparatur kann auf diese Weise gewissermaßen standardisiert werden, was deutlich zur Kostensenkung des erfindungsgemäßen Reparaturverfahrens beiträgt.

Wie an sich bekannt, wird im Rahmen einer weiteren Ausgestaltung vorgeschlagen, dass die zum Austausch vorgesehenen Ventilsitzringe durch Einschrumpfen mit dem Zylinderkopf verbunden werden.

Bezüglich der Schadensverursachung ist davon auszugehen, dass Kavitationsschäden im Sitzbereich der Ventilsitzringe dadurch entstehen, dass in den Kühlkanälen bzw. Sitzringtaschen ungünstige Strömungsverhältnisse herrschen, die unter anderem zu starken Druckschwankungen führen, was zu Materialausbrüchen in den Wänden der Kühlkanäle bzw. Sitzringtaschen führen kann. Bei fortschreitender Schädigung ist nicht auszuschließen, dass derartige Undichtigkeiten entstehen, dass auch noch Abgaskorrosion hinzutritt.

Zweckmäßig bestehen daher Ventilsitzringe aus einem auch gegen Kavitation verschleißfesten Werkstoff wie vorzugsweise Ventilstahl, hochlegiertem Vergütungsstahl oder eine CrNi-Legierung. Als geeignete Werkstoffe kommen bevorzugt X45CrSi93, 42CrMo4, G-X200CrMo332 oder CrNi 60/40 in Frage. Während die Ventilsitzringe für die Einlassventile bevorzugt als massive Ringe ausgebildet werden, bei denen jede Kühlung unterbleibt, kommen als Ventilsitzringe für die Auslassventile erfindungsgemäß solche zum Einsatz, die aus wenigstens zwei Ringteilen mit einem dazwischen ausgebildeten geschlossenen Kühlkanal durch umlaufendes Verschweißen der Ringteile hergestellt sind. Dieser Ringkanal wird nach dem Einsetzen des Ventilsitzrings von außen angebohrt und auf diese Weise an die Kühlkanäle im Zylinderkopf angeschlossen.

Üblicherweise setzt sich der Kühlwasserkreislauf in der Weise fort, dass die im Inneren des Zylinderkopfs gebohrten Kühlkanäle in eine zentrale Bohrung münden, in welcher die Aufnahmebuchse für die Einspritzdüse sitzt, die von außen gekühlt wird.

Grundsätzlich ist das erfindungsgemäße Reparaturverfahren auch bei der Fertigung neuer Zylinderköpfe, nämlich bevorzugt bei 4-Takt-Motoren entsprechend anwendbar. Bezüglich einer vorteilhaften konstruktiven Ausgestaltung wird auf Anspruch 11 verwiesen.

Im folgenden wird ein Ausführungsbeispiel der Erfindung anhand der Zeichnung erläutert. Es zeigen
- Fig. 1: eine Draufsicht auf einen Zylinderkopf
- Fig. 2: einen axialen Schnitt durch den Zylinderkopf mit Ein- und Auslassventil
- Fig. 3: einen Axialschnitt durch einen Ventilsitzring für ein Einlassventil und
- Fig. 4: einen Axialschnitt durch einen Ventilsitzring für ein Auslassventil.

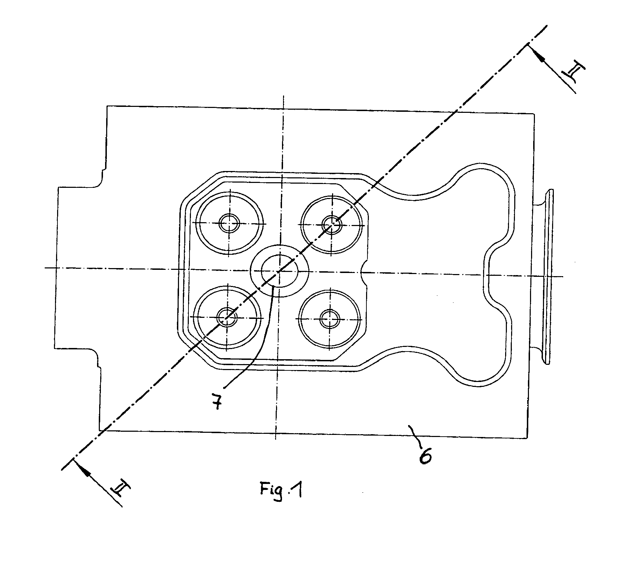

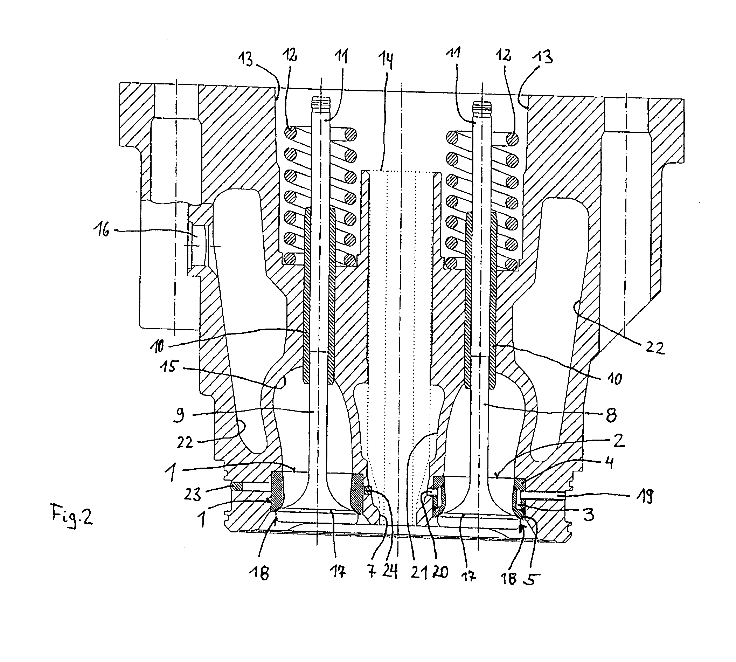

Fig. 1 zeigt in der Draufsicht einen Zylinderkopf 6 in vereinfachter Darstellung ohne Ventilkegel und Ventilfedern oder sonstige Einbauten. Die Schnittlinie II-II gemäß Fig. 2 verläuft rechts oben durch die Achse eines Auslassventils und links unten durch die Achse eines Einlassventils, wie in Fig. 2 näher dargestellt. In der Mitte erkennt man eine Bohrung 7 als Sitz für die Aufnahmebuchse der Einspritzdüse.

Nach der in Fig. 1 gewählten Anordnung befinden sich die beiden Auslassventile demnach auf der rechten Hälfte, die beiden Einlassventile auf der linken Hälfte des Zeichnungsblatts.

In der Schnittdarstellung gemäß Fig. 2 ist die Ventilanordnung vervollständigt. Auf der rechten Seite befindet sich ein Auslassventil 8, auf der linken Seite ein Einlassventil 9. Beide Ventile sitzen jeweils in einer Ventilführung 10, die im Zylinderkopf 6 befestigt ist. Beide Ventile besitzen einen Ventilschaft 11, dessen oberes Ende jeweils von einer Ventilfeder 12 umgeben ist, die in einer entsprechenden Bohrung 13 des Zylinderkopfs aufgenommen ist. In der Zeichnungsmitte befindet sich die Bohrung 7, in welcher das untere Ende einer in punktierten Linien gezeichneten Aufnahmebuchse 14 für die Einspritzdüse aufgenommen ist. Im Inneren des Zylinderkopfs 6 erkennt man mehrere Kühlkanäle wie einen umlaufenden Kühlkanal 22, der an seinem oberen Ende über eine Ausströmöffnung 16 an einem Kühlkreislauf angeschlossen ist. Die entsprechende Zuströmöffnung ist nicht dargestellt.

Die Ventile 8, 9 besitzen jeweils einen Ventilsitz 17 im oberen Bereich des Ventiltellers 18. In der geschlossenen Stellung der Ventile liegt der Ventilsitz 17 an einer entsprechenden Sitzfläche eines Ventilsitzrings an, welcher in einer entsprechenden Sitzringtasche aufgenommen und durch Einschrumpfen befestigt ist. Das Auslassventil 8 besitzt einen zweigeteilten Ventilsitzring 2, bestehend aus einem äußeren Ringteil 4 und einem inneren Ringteil 5, welche miteinander umlaufend verschweißt sind. Zwischen beiden Ringteilen 4, 5 ist ein ringförmiger Kühlkanal 3 ausgebildet, der über einen quer laufenden Kühlkanal 19 mit dem Kühlkreislauf des Zylinderkopfs verbunden ist. Auf der Ausströmseite ist ein kurzer Kühlkanal 20 angeschlossen, der die Kühlflüssigkeit gegen die Außenseite der Aufnahmebuchse 14 abströmen lässt. Für die Kühlung der Aufnahmebuchse 14 steht eine sich nach oben hin erweiternde ringförmige Kühlkammer 21 zur Verfügung.

Auch das Einlassventil 9 besitzt einen in den Zylinderkopf eingepassten Ventilsitzring 1, welcher unterschiedlich zum Ventilsitzring 2 des Auslassventils 8 massiv ausgebildet ist. Auf der Einlassseite, nämlich durch einen Einlasskanal 15 strömt kühle Verbrennungsluft in den Zylinder, so dass sich in aller Regel eine genügende Kühlung des Ventilsitzrings 1 ergibt. Daher bietet es sich an, im Rahmen von Reparaturarbeiten jede Zuströmung von Kühlflüssigkeit an den Ventilsitzring 1 des Einlassventils 9 zu unterbinden. In der Zeichnung erkennt man einen äußeren Verschlussstopfen 23 und einen inneren Verschlussstopfen 24, mit welchen ursprünglich vorhandene Kühlkanäle verschlossen wurden.

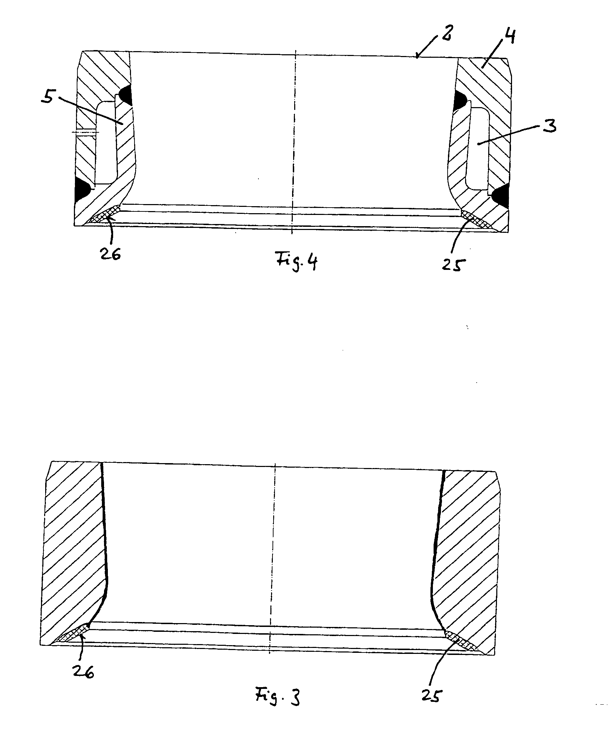

Die Fig. 3 und 4 zeigen den massiven Ventilsitzring 1 für das Einlassventil 9 und den unter Ausbildung des ringförmigen Kühlkanals 3 zweiteiligen Ventilsitzring 2 des Auslassventils 8. Da die ventilkegel nicht eingezeichnet sind, erkennt man deutlich eine Panzerung 25 der Ventilsitzflächen 26 auf Seiten der Ventilsitzringe 1, 2.

## Patentansprüche

1. Verfahren der Reparatur von Schäden eines wassergekühlten Zylinderkopfs bei 4-Takt-Verbrennungsmotoren in dessen Sitzringtaschen von Ventilsitzringen (1, 2) von Einlass- oder Auslassventilen, welche an Kühlkanäle angeschlossen sind, umfassend folgende zeitlich aufeinanderfolgende Schritte:
a) Ausdrehen der geschädigten Sitzringtaschen derart weitgehend, dass neben oberflächlichen Beschädigungen auch tiefer liegenden Hohlräume im Material des Zylinderkopfs (6) im wesentlichen beseitigt werden;
b) Einsetzen in die ausgedrehten Sitzringtaschen jeweils eines dazu passenden Ventilsitzrings (1; 2) aus einem verschleißfesten Werkstoff;
c) Verbinden vorhandener Kühlkanäle mit zu kühlenden Ventilsitzringen (2), derart, dass ein zunächst geschlossener Kühlkanal (3) eines Ventilsitzrings (2) nach dessen Einsetzen von außen angebohrt wird, um die Verbindung mit den im Zylinderkopf (6) vorhandenen Kühlkanälen herzustellen.

2. Verfahren der Reparatur von Schäden eines wassergekühlten Zylinderkopfs (6) bei 4-Takt-Verbrennungsmotoren in dessen Sitzringtaschen von Ventilsitzringen (2) von Einlassventilen, wobei die Ventilsitzringe (2) an Kühlkanäle angeschlossen sind, umfassend folgende zeitlich aufeinanderfolgende Schritte:
a) Ausdrehen der geschädigten Sitzringtaschen derart weitgehend, dass neben oberflächlichen Beschädigungen auch tiefer liegende Hohlräume im Material des Zylinderkopfs (6) im wesentlichen beseitigt werden;
b) Einsetzen in die ausgedrehten Sitzringtaschen jeweils eines dazu passenden massiven Ventilsitzrings (1; 2) aus einem verschleißfesten Werkstoff;
c) Verschließen ursprünglich vorhandener Kühlkanäle zu Ventilsitzringen, die keiner Kühlung bedürfen, mittels Verschlussstopfen (23, 24).

3. Verfahren nach Anspruch 1, **dadurch gekennzeichnet, dass** in die Bohrungen Buchsen zum Dichten der Übergänge von den Kühlkanälen des Zylinderkopfs (6) zum jeweiligen Ventilsitzring (2) eingesetzt werden.

4. Verfahren nach Anspruch 1 oder 2, **dadurch gekennzeichnet, dass** die Sitzringtaschen jeweils bis zum Erreichen vorgegebener Abmessungen ausgedreht werden, so dass die zum Austausch eingesetzten Ventilsitzringe (1; 2) vorgefertigt werden können.

5. Verfahren nach Anspruch 1 oder 2, **dadurch gekennzeichnet, dass** die zum Austausch vorgesehenen Ventilsitzringe (1; 2) durch Einschrumpfen mit dem Zylinderkopf (6) verbunden werden.

6. Verwendung eines Ventilsitzrings (2), der wenigstens aus zwei Ringteilen (4, 5) mit einem dazwischen ausgebildeten geschlossenen Kühlkanal (3) durch umlaufendes Verschweißen der Ringteile (4, 5) hergestellt ist, zum Einsetzen bei einem Reparaturverfahren nach Anspruch 1.

## Claims

1. A method for repairing damage to a water-cooled cylinder head in 4-stroke internal combustion engines, in seat ring pockets of valve seat rings (1, 2) of inlet or outlet valves thereof, which are connected to cooling channels, comprising the following, chronologically successive steps:
a) hollowing out the damaged seat ring pockets largely in such a manner that, in addition to superficial damage, deeper-lying cavities in the material of the cylinder head (6) are essentially removed;
b) inserting into the hollowed out seat ring pockets in each case one fitting valve seat ring (1; 2) consisting of a wear-resistant material;
c) connecting existing cooling channels with valve seat rings (2) to be cooled in such a manner that an initially closed cooling channel (3) of a valve seat ring (2) is drilled from the outside after its insertion in order to produce the connection to the cooling channels present in the cylinder head (6).

2. A method for repairing damage to a water-cooled cylinder head (6) in 4-stroke internal combustion engines, in seat ring pockets of valve seat rings (2) of inlet valves thereof, wherein the valve seat rings (2) are connected to cooling channels, comprising the following, chronologically successive steps:
a) hollowing out the damaged seat ring pockets largely in such a manner that, in addition to superficial damage, deeper-lying cavities in the material of the cylinder head (6) are essentially removed;
b) inserting into the hollowed out seat ring pockets in each case one fitting, solid valve seat ring (1; 2) consisting of a wear-resistant material;
c) closing originally present cooling channels to valve seat rings which do not require cooling by means of stoppers (23, 24).

3. The method according to Claim 1, **characterised in that** bushings are inserted into the bores to seal the transitions from the cooling channels of the cylinder head (6) to the respective valve seat ring (2).

4. The method according to Claim 1 or 2, **characterised in that** the seat ring pockets are each hollowed out until predefined dimensions are reached, so the valve seat rings (1; 2) used for the replacement can be prefabricated.

5. The method according to Claim 1 or 2, **characterised in that** the valve seat rings (1; 2) provided for the replacement are connected to the cylinder head (6) by shrink-fitting.

6. The use of a valve seat ring (2), which is produced at least from two ring parts (4, 5) with a closed cooling channel (3) formed between them, by circumferential welding of the ring parts (4, 5), for insertion during a repair method according to Claim 1.

## Revendications

1. Procédé de réparation des détériorations d'une culasse refroidie à l'eau sur des moteurs à combustion interne à 4 temps dans les poches de sièges rapportés des sièges rapportés de soupape (1, 2) des soupapes d'admission ou d'échappement, qui sont raccordées aux canaux de refroidissement, comprenant les étapes suivantes en succession temporelle :
a) aléser les poches de sièges rapportés endommagées le plus possible de sorte que en dehors des détériorations de surface, les espaces creux situés plus profondément dans le matériau de la culasse (6) soient essentiellement comblés ;
b) insérer dans les poches de sièges rapportés alésées respectivement un siège rapporté de soupape (1 ; 2) adapté constitué d'un matériau résistant à l'usure ;
c) relier les canaux de refroidissement présents aux sièges rapportés de soupape (2) à refroidir, de sorte qu'un canal de refroidissement (3) fermé d'un siège rapporté de soupape (2) soit ensuite foré après l'insertion de ce dernier depuis l'extérieur, afin d'établir la liaison avec les canaux de refroidissement présentes dans la culasse (6).

2. Procédé de réparation des détériorations d'une culasse refroidie à l'eau (6) sur des moteurs à combustion interne à 4 temps dans les poches de sièges rapportés des sièges rapportés de soupape (2) de soupapes d'admission, dans lequel les sièges rapportés de soupape (2) sont raccordés aux canaux de refroidissement, comprenant les étapes suivantes en succession temporelle .
a) aléser les poches de sièges rapportés endommagées le plus possible de sorte que en dehors des détériorations de surface, les espaces creux situés plus profondément dans le matériau de la culasse (6) soient essentiellement comblés ;
b) insérer dans les poches de sièges rapportés alésées respectivement un siège rapporté de soupape (1 ; 2) massif adapté constitué d'un matériau résistant à l'usure ;
c) obturer les canaux de refroidissement présents à l'origine sur les sièges rapportés de soupape, qui ne nécessitent pas de refroidissement, au moyen de bouchons d'obturation (23, 24).

3. Procédé selon la revendication 1, **caractérisé en ce que**, dans les alésages, des douilles pour rendre étanche les transitions des canaux de refroidissement de la culasse (6) par rapport au siège rapporté de soupape (2) respectif sont employées.

4. Procédé selon les revendications 1 ou 2, **caractérisé en ce que** les poches de sièges rapportés sont respectivement alésées jusqu'à atteindre des dimensions prescrites, de sorte que les sièges rapportés de soupape (1 ; 2) employés en vue d'un remplacement puissent être préfabriqués.

5. Procédé selon les revendications 1 ou 2, **caractérisé en ce que** les sièges rapportés de soupape (1 ; 2) prévus à des fins de remplacement sont reliés à la culasse (6) par rétractation.

6. Utilisation d'un siège rapporté de soupape (2), qui est fabriqué à partir de deux parties d'anneau (4, 5) avec un canal de refroidissement (3) fermé réalisé entre ceux-ci par soudure périphérique des parties d'anneau (4, 5), à employer dans le cadre d'un procédé de réparation selon la revendication 1.
